# EUROPÄISCHE PATENTSCHRIFT

(11) **EP 0 396 043 B1**
(45) Veröffentlichungstag und Bekanntmachung des Hinweises auf die Patenterteilung: **23.06.1993**
(21) Anmeldenummer: 90108079.6
(22) Anmeldetag: 27.04.1990
(51) Int. Cl.: C01B 25/45, C01F 11/46

(54) **Verfahren zur Herstellung von Kaliummagnesiumphosphat**
Method for the production of potassium magnesium phosphate
Procédé de préparation de phosphate de magnésium et de potassium

(30) Priorität: 05.05.1989 DE 3914796
(43) Veröffentlichungstag der Anmeldung: 07.11.1990
(73) Patentinhaber: KALI + SALZ AG, D-34119 Kassel (DE)
(72) Erfinder: Löblich, Karl-Richard, Dr., D-3013 Barsinghausen 1 (DE); Lange, Susanne, D-3221 Woltershausen (DE)

(56) Entgegenhaltungen:
- DE-A- 3 204 238
- DE-A- 3 216 973
- DE-C- 3 326 796

## Beschreibung

Kaliummagnesiumphosphat ist eine Verbindung, deren Ionen von Pflanzen ausnahmslos als Nährstoffe benötigt werden. Seine Löslichkeit ist verhältnismäßig gering, so daß die Konzentration der Nährstoffe in der Bodenlösung auch bei hoher Dosierung zu einem neutralen bis leicht sauren Boden keine toxischen Werte annehmen kann. Trotz dieser niedrigen Sättigungskonzentration weist feinteiliges Kaliummagnesiumphosphat aber wegen seiner großen spezifischen Oberfläche eine hohe Lösegeschwindigkeit auf, die einen Nährstoffentzug durch die Pflanze in der Bodenlösung fast verzögerungsfrei wieder ausgleicht. Auf diese Weise wird mit dieser Verbindung eine Vorratsdüngung mit bedarfsgesteuerter Nährstoffabgabe möglich.

Es sind viele Verfahren zur Herstellung dieser Verbindung bekannt geworden. Ein erster Überblick über diese findet sich in "Gmelins Handbuch der Anorganischen Chemie", 8.Auflage, System-Nr. 27 (B), Lieferung 4 (1939), S. 465-466. Die hierin genannten Verfahren gehen von Einsatzstoffen aus, welche erst mit großem technischem Aufwand aus den verfügbaren Grundstoffen hergestellt werden müssen. Zu diesen gehört auch das in der DE-A- 19 24 284 beschriebene, welches von Phosphorsäure, Magnesiumoxid und Kaliumhydroxid ausgeht.

Es folgten Vorschläge mit dem Ziel, von den teuren Kaliumverbindungen zugunsten der Chloride und Sulfate des Kaliums wegzukommen. In der DE-C- 619 397 wird das Austreiben von Chlorwasserstoff aus Kalium- und Magnesiumchlorid durch Erhitzen mit Phosphorsäure zur Herstellung des Kaliummagnesiumphosphats vorgeschlagen.

Das Verfahren erfordert jedoch einen hohen Energieaufwand und wirft große Korrosionsprobleme auf. Außerdem kann das Verfahren nur angewendet werden, wenn der Chlorwasserstoff eine sinnvolle Abnahme findet.

Nach den JP-C 17 694, BE-A- 64 81 111 und GB-A- 969 419 kann Kaliummagnesiumphosphat aus Meerwasser gefällt werden, wobei allerdings sehr unreine Produkte entstehen.

Die DE-C- 12 65 726, US-A- 3,615,186 und BE-A- 740 307 empfehlen den Umsatz von Kalium- und Magnesiumchlorid bzw. -sulfat mit Phosphorsäure in Gegenwart von organischen Aminen. Bei der Fällung des Kaliummagnesiumphosphats verbleiben letztere als Chloride bzw. Sulfate in der Mutterlauge zurück. Die quantitative Rückgewinnung der Amine aus der Mutterlauge ist nur mit hohem technischem Aufwand möglich.

Die DE-C- 28 31 672 zeigt auf, wie auf direktem Wege ohne Hilfsmittel, wie z.B. Amine, Kaliumchlorid mit Phosphorsäure oder Magnesiumdihydrogenphosphat und Magnesiumoxid zu Kaliummagnesiumphosphat umgesetzt werden kann. Die anfallenden Mutterlaugen sind im Prozeß nicht wieder verwendbar und kaum anderweitig unterzubringen.

Den Anfall schwer aufzuarbeitender oder abzustoßender Mutterlaugen suchen die folgenden Vorschläge zu vermeiden.
Nach der FR-A- 722 378 werden durch Anmischen von Calciumdihydrogenphosphat, Kaliumsulfat und Magnesiumoxid mit Wasser Produkte gebildet, die Kaliummagnesiumphosphat enthalten.

Eine ähnliche Lehre gibt die DE-B- 17 67 329.

Diese Vorschläge wurden durch die in der DE-A- 33 26 796 mitgeteilte Lehre dahingehend verbessert, daß zunächst das Calciumdihydrogenphosphat mit Kaliumsulfat zu Syngenit und Kaliumdihydrogenphosphat-Lösung umgesetzt, der Syngenit aus ihr abgetrennt und dann mit Magnesiumoxid das Kaliummagnesiumphosphat daraus gefällt und die Mutterlauge der Fällung zum Anschlämmen des Calciumdihydrogenphosphats verwendet wird. Beide Produkte, der Syngenit und das Kaliummagnesiumphosphat, werden getrennt granuliert und erst dann gemischt, um Sekundärumsetzungen in den Granalien zu vermeiden und so die Pflanzenverfügbarkeit der Nährstoffe über lange Zeiträume hinweg sicherzustellen.

In der DE-C- 32 04 238 werden die Grundlagen für den Vorschlag der DE-A- 32 16 973 gelegt. In letzterer wird vorgeschlagen, aus einer Lösung, welche lösliches Phosphat neben Kalium- und Magnesiumsulfat enthält, mit einer basisch reagierenden Magnesiumverbindung Kaliummagnesiumphosphat auszufällen und die Mutterlauge zur Verminderung der Einsatzmenge der teuren basischen Magnesiumverbindung mit Calciumoxid bzw. -hydroxid zu behandeln. Dem durch die Kalkfällung entstehenden Gemisch von Magnesiumhydroxid und Gips in Mutterlauge wird durch Phosphorsäure-Zugabe das Magnesium als Magnesiumdihydrogenphosphat, welches in Lösung geht, entzogen, worauf der Gips von der Lösung abgetrennt wird. Die entstandene Phosphatlösung wird wieder zur Fällstufe für Kaliummagnesiumphosphat geführt.

In Erweiterung dieses Gedankens wird in der DE-C- 32 16 973 noch eine Variante vorgeschlagen, welche eine sinnvolle Verwendung calcitreicher Rohphosphate verheißt.

Bei der mehrfachen Wiederholung der Versuche, die dieser DE-Patentschrift zugrunde liegen, hat sich jedoch gezeigt, daß der abgetrennte Gips sehr oft durch erhebliche Mengen mitgefallener Kaliumcalciumsulfat-Doppelsalze verunreinigt ist. Die Ursache ist der hohe Gehalt an Kaliumsulfat in der Lösung, aus welcher der Gips mit dem Kalk gefällt wird. Unter den vorliegenden Bedingungen ist unterhalb 333 K Syngenit und oberhalb dieser Temperatur Pentasulfat der stabile Bodenkörper, d.h., der Gips kann nur als metastabiler Bodenkörper auftreten, der sich u.U. sehr rasch in die stabilen Substanzen umwandeln kann.

Da der Gips verworfen wird, führt das Auftreten der genannten Doppelsalze darin zu beträchtlichen Ausbeuteverlusten beim eingesetzten Kalium. Hieraus ergibt sich die Aufgabe, die Doppelsalzbildung durch geeignete Maßnahmen auszuschließen und das Verfahren zugleich zu vereinfachen.

Es wurde nun ein Verfahren zur Herstellung von Kaliummagnesiumphosphat-Hexahydrat durch Umsetzung von Calciumdihydrogenphosphat mit Kaliumsulfat und einer basischen Magnesiumverbindung in zwei Stufen unter Isolierung des dabei als zweiten Feststoff erzeugten Gipses gefunden.

Das Verfahren ist gekennzeichnet durch die Kombination folgender Maßnahmen:
- das in der ersten Stufe benötigte Kaliumsulfat wird in die zweite Stufe vor oder zusammen mit der Zugabe des Magnesiumoxids und/oder -hydroxids eingeführt und nach der Kristallisation und Abtrennung des Kaliummagnesiumphosphats mit der Mutterlauge zur ersten Stufe übergeführt, wo die Mutterlauge nach Maßgabe der Umsetzungsgeschwindigkeit zu einer Aufschlämmung des feinteiligen Calciumdihydrogenphosphats in aus dem Ablauf dieser Stufe an ihren Eintritt zurückgeführter ausreagierter Trübe, welche bereits gebildeten Gips als Impfgut enthält, und dem Waschfiltrat des Gipses zugegeben wird,
- die aus der ersten Stufe ablaufende, praktisch ausreagierte Trübe wird aufgeteilt in den Teil, der zum Anschlämmen des Calciumdihydrogenphosphats zurückgeführt wird, und den Teil, der nach Abtrennung des Gipses die in der zweiten Stufe benötigte Kaliumdihydrogenphosphat-Lösung liefert,
- die geklärte Kaliumdihydrogenphosphat-Lösung aus der ersten Stufe wird zusammen mit oder unmittelbar nach der Zugabe des Magnesiumoxids und/oder -hydroxids und des Kaliumsulfats in die aus dem Ablauf der zweiten Stufe an deren Eintritt zurückgeführte ausreagierte Trübe, welche bereits gebildetes Kaliummagnesiumphosphat als Impfgut enthält, eindosiert,
- es wird in die zweite Stufe Ammoniak als Kristallisationsanreger eingeleitet,
- die aus der zweiten Stufe ablaufende ausreagierte Trübe wird aufgeteilt in den Teil, welcher an ihren Eintritt zurückgeht, und den Teil, welcher durch Filtrieren in das als Produkt auszuführende Kaliummagnesiumphosphat Hexahydrat, welches vor dem Trocknen nicht mit Wasser gewaschen wird, und in die zur ersten Stufe zu führende Mutterlauge zerlegt wird.

Außerdem ist das Verfahren dadurch gekennzeichnet, daß das Calciumdihydrogenphosphat in der ersten Stufe mit ungefähr der gleichen Menge in Kaliumdihydrogenphosphat-Lösung suspendiertem Gips, wie sich neu bildet, und dem Waschfiltrat aus der Wäsche des auszuführenden Gipses mit Wasser aufgeschlämmt und bei einer Temperatur zwischen 308 und 333 K mit der Kaliumsulfat enthaltenden und ungefähr nach Maßgabe des Reaktionsfortschritts zugesetzten Mutterlauge der Kaliummagnesiumphosphat-Kristallisation umgesetzt und die resultierende, praktisch ausreagierte Trübe geteilt wird, davon der eine Teil an den Eintritt der ersten Stufe zurückgeführt und der andere Teil eingedickt und filtriert wird, worauf der abgetrennte Gips gewaschen und ausgeführt und die geklärte Kaliumdihydrogenphosphat-Lösung der zweiten Stufe zugeführt wird.

Weiter ist wesentlich, daß der aus der ersten Stufe ausgeführte Gips mit einer Wassermenge gewaschen wird, wie sie mit den Produkten beider Stufen als Kristallwasser und anhaftend abzüglich der bei der Reaktion gebildeten und der mit den Reaktanden eingetragenen Wassermenge ausgetragen wird und das Waschfiltrat zum Eintritt in die erste Stufe geführt wird.

Außerdem ist wesentlich, daß die nach Abtrennung des Gipses aus der ersten Stufe gewonnene Kaliumdihydrogenphosphat-Lösung an Phosphaten und Sulfaten des Kaliums 90 bis 100 g Kaliumdihydrogenphosphat und 15 bis 25 g Kaliumsulfat pro 1000 g Wasser enthält.

Außerdem ist bedeutsam, daß das Magnesiumoxid und/oder -hydroxid in der zweiten Stufe zuerst zusammen mit dem Kaliumsulfat in vom Ablauf dieser Stufe an ihren Eintritt zurückgeführter, ausreagierter Trübe dispergiert, danach die aus der ersten Stufe herangeführte Kaliumdihydrogenphosphat-Lösung zugegeben, die Reaktionsmischung bei einer Temperatur zwischen 303 und 315 K 20 bis 30 min gerührt, die aus dieser Stufe ablaufende Trübe in die zurückzuführende und die aufzuarbeitende Teilmenge geteilt und in der aufzuarbeitenden Teilmenge das Kaliummagnesiumphosphat als Hexahydrat von der Mutterlauge abgetrennt und als Produkt ausgeführt wird, worauf die Mutterlauge der ersten Stufe zugeführt wird.

Eine bevorzugte Version des Verfahrens ist, die Kaliumdihydrogenphosphat-Lösung dem Eintritt der zweiten Stufe gleichzeitig mit der rückgeführten Trübe, dem Magnesiumoxid und/oder -hydroxid und dem Kaliumsulfat aufzugeben und das Kaliumsulfat mit dem Magnesiumoxid und/oder -hydroxid vor der Einfuhr in die zweite Stufe vorzumischen.

Das Verfahren ist weiter dadurch gekennzeichnet, daß die Mutterlauge aus der zweiten Stufe 90 bis 100 g Kaliumsulfat und zwischen 8 und 70 g Magnesiumsulfat pro 1000 g Wasser enthält und daß am Eintritt in die zweite Stufe Ammoniak in die Reaktionsmischung in der Dosierung von mindestens 1 kg/t Kaliummagnesiumphosphat-Produkt und höchstens 1 Mol pro Mol mit unreinem Calciumdihydrogenphosphat eingetragener freier Phosphorsäure eingeleitet wird.

Das Kaliummagnesiumphosphat wird nicht mit Wasser, sondern höchstens mit Kaliumdihydrogenphosphat-Lösung gewaschen und das dabei anfallende Waschfiltrat zum Eintritt in die zweite Stufe geführt.

Das Verfahren der Erfindung hebt sich also von dem der DE-C- 32 04 238 dadurch ab, daß es wie das der DE-A- 33 26 796 zweistufig ist und einen geschlossenen Lösungskreislauf ermöglicht. Im Gegensatz zum letztgenannten erzeugt das Verfahren der Erfindung jedoch keinen Syngenit als Produkt. Deshalb ist dieses auf eine hohe Ausbeute sowohl an Phosphat als auch an Kalium mit dem Kaliummagnesiumphosphat-Produkt ausgerichtet.

Der Vorschlag der DE-C- 32 04 238 enthält keine Aussage darüber, welche Verwendung die bei der Kristallisation des Kaliummagnesiumphosphats anfallende Mutterlauge finden könnte. Dies gilt auch für die Grundversion des Verfahrensvorschlags in der DE-A- 32 16 973. Erst die Einbeziehung des Rohphosphat-Aufschlusses macht in der erweiterten Version die Nutzung der Mutterlauge um den Preis einer großen Komplexität des Gesamtverfahrens möglich.

Das Verfahren der Erfindung stellt demgegenüber eine große Vereinfachung dar. Als Phosphat-Einsatzstoff dient bei diesem das unter der Bezeichnung "Triplesuperphosphat" (TSP) gehandelte Aufschlußprodukt von Rohphosphat mit Phosphorsäure. Der Hauptbestandteil des TSP ist das Calciumdihydrogenphosphat. Außer anderen Nebenbestandteilen enthält es auch etwas an freier Phosphorsäure. Die bevorzugte Durchführungsweise des erfindungsgemäßen Verfahrens ist die kontinuierliche.

Das Verfahren der Erfindung setzt in der ersten Stufe TSP mit Mutterlauge aus der zweiten Stufe, welche das in der zweiten Stufe zugesetzte Kaliumsulfat enthält, zu Gips und Kaliumdihydrogenphosphat-Lösung um. In der zweiten Stufe wird Magnesiumoxid und/oder -hydroxid in Gegenwart des hier eingebrachten Kaliumsulfats mit der Kaliumdihydrogenphosphat-Lösung aus der ersten Stufe zu Kaliummagnesiumphosphat-Hexahydrat und Mutterlauge umgesetzt. Die Mutterlauge wird der ersten Stufe zugeführt. Hierdurch wird die Abgabe irgendwelcher Lösungen an die Umwelt vermieden.

Wenn in dem Verfahren Ausbeuteverluste auftreten, so können diese nur in der ersten Stufe auftreten, denn in der zweiten Stufe gehen alle Wertstoffe entweder in das Kaliummagnesiumphosphat-Produkt oder in die Mutterlauge, welche der ersten Stufe zugeführt wird. Verlustig gehende Wertstoffe können nur mit dem Gips ausgeführt werden.

Das Verfahren der Erfindung minimiert die Phosphatverluste dadurch, daß der Gehalt der Phosphat-Lösung, die in der ersten Stufe entsteht, auf maximal 100 g Kaliumdihydrogenphosphat pro 1000 g Wasser begrenzt und der entstehende Gips intensiv mit Wasser gewaschen wird, wobei das Waschfiltrat zum Eintritt der ersten Stufe geführt wird.

Ganz entscheidend werden die Phosphat- und Kaliumverluste auch durch die besondere Verfahrensweise für die erste Stufe verringert. Bei dieser wird das unter 0,1 mm gemahlene TSP in einem Gemisch aus dem Ablauf der ersten Stufe an ihren Eintritt zurückgeführter, praktisch ausreagierter Trübe und dem Gipswaschwasser dispergiert, bevor die Mutterlauge aus der zweiten Stufe, welche das für den Umsatz benötigte Kaliumsulfat enthält, dem Reaktionsfortschritt entsprechend zugeführt wird. Hierdurch wird sichergestellt, daß die Konzentration des Kaliumsulfats zu keinem Zeitpunkt der fortschreitenden Umsetzung den Wert für die Syngenitbildung in der Reaktionsmischung wesentlich und auch nicht über einen kritischen Zeitraum hinweg überschreitet, obwohl der Kaliumsulfatgehalt der Mutterlauge um ein Mehrfaches über dem für die Syngenitbildung maßgebenden Wert liegt. Zwischenzeitlich gebildeter Syngenit würde Phosphat einschließen und sich auch nach Absinken der Kaliumsulfat-Konzentration zu langsam wieder zersetzen. Die Rückführung von ausreagierter Trübe vom Ablauf zum Eintritt der ersten Stufe hat den weiteren Vorteil, daß bereits zu Reaktionsbeginn Impfgips vorhanden ist. Dadurch wird die Filtrierbarkeit des Gipses entscheidend verbessert.

Die beschriebene Verfahrensweise für die erste Stufe ermöglicht in jedem Fall Kaliumausbeuten von über 97 % und Phosphatausbeuten zwischen 85 und 90 %, wenn das TSP fein genug aufgemahlen gewesen ist. Der Hauptverlust an Phosphat wird durch den Anteil des nicht aufgeschlossenen Apatits im TSP verursacht. Vom löslichen Phosphat geht nur sehr wenig verloren. Wegen seines geringen Phosphatgehalts kann der Gips bei fehlenden Verwendungsmöglichkeiten nach Zusatz kleiner Mengen von Branntkalk oder gelöschtem Kalk zur Bindung der löslichen Anteile ohne Belastung für die Umwelt aufgehaldet werden.

Der Gips kann aber auch bei Bedarf wegen seines Restgehaltes an Phosphat in andere Düngemittel eingearbeitet werden. In diesem Fall braucht in der ersten Stufe nur auf Kalium, nicht aber unbedingt auf Phosphatausbeute gefahren zu werden. In solchem Fall darf das TSP grober eingesetzt werden.

Für die zweite Stufe des erfindungsgemäßen Verfahrens, in welcher das Kaliummagnesiumphosphat durch Umsatz von Magnesiumoxid und/oder -hydroxid mit der Kaliumdihydrogenphosphat-Lösung aus der ersten Stufe kristallisiert wird, ist es von entscheidender Bedeutung, daß die basische Magnesiumverbindung nicht auf eine Vorlage der Kaliumdihydrogenphosphat-Lösung trifft, die Temperatur keinesfalls 315 K übersteigt, die Kristallisation durch Zugabe von mindestens 1 kg Ammoniak (wasserfrei gerechnet) pro t Produkt angeregt und durch einen hohen Kaliumsulfat-Gehalt der Reaktionsmischung gefördert wird. Bei der bevorzugten kontinuierlichen Fahrweise unter Anwendung einer Rührkesselkaskade darf also keineswegs die Kaliumdihydrogenphosphat-Lösung in den ersten Kessel und das Magnesiumoxid in den zweiten eingespeist werden.

Das optimale Ergebnis wird durch Rückführung von ausreagierter Trübe vom Ablauf der zweiten Stufe (aus dem letzten Kessel) zu ihrem Eintritt (in den ersten Kessel) erzielt. Die rückgeführte Trübe ermöglicht das Dispergieren des Magnesiumoxids und/oder -hydroxids und des Kaliumsulfats vor der oder mit der gleichzeitigen Zufuhr der Kaliumdihydrogenphosphat-Lösung und stellt zugleich das die Kristallisation fördernde Impfgut gleich am Eintritt in die zweite Stufe zur Verfügung.

Die aus der zweiten Stufe ablaufende Trübe wird geteilt. Der eine Teil wird an den Eintritt dieser Stufe zurückgeführt. Aus dem anderen Teil wird das Kaliummagnesiumphosphat-Hexahydrat als Produkt von der Mutterlauge abgetrennt. Die geklärte Mutterlauge mit ihrem Kaliumsulfat-Gehalt wird der ersten Stufe zugeführt.

Der Kaliummagnesiumphosphat-Filterkuchen wird nicht mit Wasser, sondern höchstens mit aus der ersten Stufe herangeführter Kaliumdihydrogenphosphat-Lösung gewaschen. Diese Vorgehensweise hat den Vorteil, daß sich die mit den Einsatzstoffen eingeschleppten Begleitsalze und das sich durch Nebenreaktionen gebildete Magnesiumsulfat im Lösungskreislauf nicht über ein tolerierbares Maß hinaus anreichern können. Bei Anwendung der Wäsche mit Kaliumdihydrogenphosphat-Lösung wird das Waschfiltrat zum Eintritt der zweiten Stufe geführt.

Durch Nebenreaktionen bildet sich bei allen bekannten Verfahren neben dem Kaliummagnesiumphosphat-Hexahydrat immer ein gewisser Anteil an Trimagnesiumphosphat-(8)Hydrat. Im erfindungsgemäßen Verfahren wird die Nebenreaktion durch die Zugabe kleiner Mengen Ammoniak und die daraus hervorgehenden Ammoniumionen deutlich gehemmt, so daß ein bedeutend reineres Produkt entsteht als ohne diese Zugabe. Die Wäsche mit der Kaliumdihydrogenphosphat-Lösung vermindert den Gehalt des Produkts an Trimagnesiumphosphat nochmals und wandelt gegebenenfalls überschüssiges Magnesiumhydroxid um.

Die hohe Reinheit des so gewonnenen Kaliummagnesiumphosphat-Hexahydrats erlaubt den Verzicht auf die Wäsche des Produkts mit Wasser und die Inkaufnahme der sekundären Bildung einer kleinen Menge von Trimagnesiumphosphat durch Umsatz von Kaliummagnesiumphosphat mit dem Magnesiumsulfat aus der anhaftenden Lösung beim Trocknen. Auch bei Verwendung unreiner Einsatzstoffe von Düngemittelqualität erhält man so ein trockenes Produkt, dessen Kaliumgehalt zu über 80 % als Kaliummagnesiumphosphat vorliegt.

Zur Bildung von Magnesiumsulfat kommt es in der Umlauflösung vor allem auch durch den Umsatz von freier Phosphorsäure mit Magnesiumoxid bzw. -hydroxid und Kaliumsulfat zu Kaliummagnesiumphosphat. Manche TSP-Sorten enthalten neben dem Calciumdihydrogenphosphat auch erhebliche Anteile an freier Phosphorsäure, was einen Anstieg sowohl des Verbrauchs an Magnesiumoxid bzw. -hydroxid als auch des Gehalts der Umlauflösung an Magnesiumsulfat zur Folge hat. Es hat sich als vorteilhaft erwiesen, beim Einsatz säurereicher TSP-Sorten den erfindungsgemäßen Ammoniakeinsatz auf 1 Mol pro Mol Phosphorsäure zu steigern. Dadurch wird die Magnesiumsulfatbildung beim Umsatz der Phosphorsäure vermieden. Allerdings entsteht ein entsprechender Anteil an Ammoniummagnesiumphosphat-Hexahydrat im Produkt. Dieser Nachteil wird jedoch durch den Rückgang des Anteils an Trimagnesiumphosphat mehr als ausgeglichen.

Die Dosierung des in die zweite Stufe einzutragenden Magnesiumoxids bzw. -hydroxids erfolgt auf der Basis der Stöchiometrie, wobei eine Überdosierung von bis zu 5 % zugelassen ist. Bei den technischen Einsatzstoffen kann aber nur der reaktive Anteil der Rechnung zugrundegelegt werden.

Dieser wird beim Oxid bzw. Hydroxid durch Rühren von 1 g Substanz mit 100 ml einer Lösung, die 200 g Ammoniumchlorid auf 1000 g Wasser enthält, im geschlossenen Gefäß bei 323 K umgesetzt. Nach 30 min wird abgekühlt und das freigesetzte Ammoniak bestimmt, welches ein Maß für den reaktionsfähigen Anteil ist.

Die bevorzugte Durchführungsart des Verfahrens der Erfindung ist in beiden Stufen die kontinuierliche in Rührkesselkaskaden. Eine solche Kaskade wird vorteilhaft als mehrzellige Kammerkaskade ausgeführt - ähnlich, wie sie oft in der Phosphorsäuregewinnung aus Rohphosphat mit Schwefelsäure eingesetzt wird. Die Kammerkaskade hat als Grundkörper ein langgestrecktes, kastenförmiges Gefäß, welches durch wechselweise angeordnete Stand- und Tauchwehre in miteinander kommunizierende Zellen unterteilt ist. Eine oder mehrere der ersten Zellen sind die Aufgabezellen. Diese werden mit hochtourigen Zahnscheibenrührern versehen, während die nachfolgenden mit langsamer laufenden Rührwerken ausgestattet sind, welche ausreichen, die noch vorhandenen und/oder die entstandenen Feststoffe in Schwebe zu halten. Die Kammerkaskade arbeitet mit freiem Auslauf. Der sich zwischen der ersten und der letzten Zelle einstellende Niveauunterschied hängt naturgemäß vom Durchsatz ab. In jeder der Verfahrensstufen werden Kammerkaskaden mit acht bis zehn Zellen eingesetzt.

Das Verfahren der Erfindung weist neben dem großen Kreislauf zwischen den Stufen eins und zwei, zwischen denen sich die Zusammensetzung der Lösung den Reaktionsabschnitten entsprechend ändert, noch die beiden Trübekreisläufe durch Rückführung von Teilströmen in jeder der beiden Stufen vom Ablauf einer Kaskade zu ihrem Eintritt auf.

Das Verfahren der Erfindung ermöglicht einen geschlossenen Lösungskreislauf auf eine viel einfachere und sichere Weise als der Vorschlag der DE-A- 32 16 973 und vermeidet daher Umweltbelastungen zuverlässiger. Im Gegensatz zum Vorschlag der DE-A- 33 26 796 wird das Ziel auch ohne Syngenitbildung erreicht.

Folgende Beispiele ergänzen die Beschreibung des erfindungsgemäßen zweistufigen Verfahrens:

### Beispiel 1

Charakterisierung der Einsatzstoffe:

Das eingesetzte Triplesuperphosphat enthält 45,7 % P₂O₅. Der Hauptbestandteil ist mit 69,5 % Calciumdihydrogenphosphat-Hydrat. Neben 4,5 % Dihydrogenphosphaten des Magnesiums und Natriums enthält es 1,7 % freie Phosphorsäure und 5,8 % Apatit. Begleitstoffe sind Gips, Sand und tonige Substanzen. Auch Natriumchlorid ist mit 0,38 % vertreten.

Das eingesetzte Kaliumsulfat (51,0 % K₂O) ist von Düngemittelqualität und enthält 92,4 % K₂SO₄, 1,6 % KCl, 0,2 % NaCl, 3,5 % MgSO₄, 1,2 % CaSO₄ und 0,3 % Unlösliches.

Das eingesetzte Magnesiumoxid enthält 95,5 % Gesamt-MgO; der Gehalt an reaktivem MgO ist 88,9 %.

Die apparative Ausstattung der ersten Verfahrensstufe umfaßt eine Kammerkaskade mit acht Zellen, eine Vorrichtung zum Abziehen von Impftrübe aus der letzten Zelle und Rückführen zur ersten Zelle, einen 4 m-Klärer und ein kontinuierlich arbeitendes Filter. Dazu kommen die notwendigen Fördermittel und Dosiervorrichtungen.

Der ersten Zelle werden in der Stunde 4,6 m³ Waschfiltrat, 14 m³ Impftrübe, die von der letzten Zelle nach hier zurückgeführt wird, und 1,612 t auf unter 0,1 mm aufgemahlenes Triplesuperphosphat kontinuierlich zugeführt. Auf die ersten drei Zellen verteilt, werden pro Stunde insgesamt 11,7 m³ Mutterlauge aus der zweiten Stufe aufgegeben. Die Mutterlauge aus der zweiten Stufe enthält auf 1000 g Wasser 96 g Kaliumsulfat, 23 g Magnesiumsulfat, 1 g Natriumsulfat und 17 g Natriumchlorid.

Die Temperatur wird in der Kaskade auf ungefähr 323 K eingestellt. Nach 30 min Verweilzeit läuft der Teilstrom der Trübe, der nicht zurückgeführt wird, zum Klärer ab. Die klare Phosphatlösung enthält auf 1000 g Wasser 93 g Kaliumdihydrogenphosphat, 2 g Phosphorsäure, 23 g Kaliumsulfat, 22 g Magnesiumsulfat, 5 g Calciumsulfat, 2 g Natriumsulfat und 15 g Natriumchlorid. Sie wird als Klärerablauf zwischengestapelt und dann in die zweite Stufe eindosiert.

Das eingedickte Sediment des Klärers der ersten Stufe wird einem Filter aufgegeben und der Filterkuchen mit 2,3 m³ Wasser gewaschen. Die vereinigten Filtrate werden als Waschfiltrat der ersten Zelle der Kaskade zugeführt. 1,67 t Filterkuchen werden ausgeführt. Er enthält ungefähr 32 % anhaftende Feuchte. Trocken gerechnet fallen 1,14 t Umsetzungsgips an, wovon der Hauptbestandteil mit ca. 71 % CaSO₄.2H₂O ist. Die Trockensubstanz enthält 8,3 % P₂O₅; 0,91 % K₂O und 29,7 % CaO. Bei fehlender Verwendung wird der feuchte Umsetzungsgips nach Zumischen von 28 kg Calciumhydroxid/t Trockensubstanz aufgehaldet. Das Calciumhydroxid verhindert eine spürbare Auswaschung von Phosphat aus der Halde.

Die apparative Ausstattung der zweiten Stufe ist derjenigen der ersten Stufe sehr ähnlich. Sie wird durch einen Trockner für das Kaliummagnesiumphosphat-Produkt vervollständigt. Jede zweite Zelle ist mit einem Wärmetauscher zum Abführen der Reaktionswärme ausgestattet. Aus der letzten Zelle der Kaskade werden stündlich 14 m³ Impftrübe zur ersten Zelle zurückgepumpt.

In die erste Zelle werden stündlich 0,397 t technisches Magnesiumoxid und 0,78 t Kaliumsulfat gleichmäßig eingespeist und 17 kg Ammoniak eingeleitet. 13,6 m³ geklärte Kaliumdihydrogenphosphat-Lösung werden stündlich von der ersten Stufe herangeführt und auf die ersten beiden Zellen verteilt aufgegeben.

Die mittlere Verweilzeit in der Kaskade beträgt ungefähr 30 min. Dabei wird eine Reaktionstemperatur von ca. 310 K gehalten. Der pH-Wert stellt sich auf 7,6 ein und wird zur Prozeßkontrolle verwendet.

Dem Klärer werden stündlich 13,9 m³ aus der letzten Zelle ablaufende Trübe und 4,2 m³ nachzuklärendes Filtrat aus der Produktfiltration zugeführt. Aus dem Klärer laufen pro Stunde 11,7 m³ geklärte Mutterlauge ab, welche der ersten Stufe zum Umsatz mit dem Triplesuperphosphat zugeführt werden. Sie enthält auf 1000 g Wasser 96 g Kaliumsulfat, 23 g Magnesiumsulfat, 1 g Natriumsulfat und 17 g Natriumchlorid.

Dem Produktfilter werden stündlich 6,5 m³ eingedickte Trübe aufgegeben. Es werden 3,4 t feuchtes Kaliummagnesiumphosphat-Hexahydrat pro Stunde abgeworfen. Der Filterkuchen wird nicht gewaschen. Nach dem Trocknen bei einer Temperatur von 313 bis 333 K im Wirbelschichttrockner resultieren 2,5 t trockenes Hexahydrat, welches als Produkt ausgeführt wird. Dieses enthält 73,5 % Kaliummagnesiumphosphat-Hexahydrat, 9,7 % Ammoniummagnesiumphosphat-Hexahydrat und 9,2 % andere Phosphate des Magnesiums und Calciums.

Das Produkt weist folgende Gehalte auf:

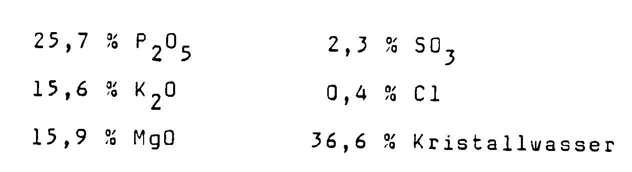

Das kalzinierte Produkt enthält an Nährstoffen:
40,2 % P₂O₅ 24,3 % K₂O 24,8 % MgO

Die Ausbeuten des Verfahrens sind:
- an Phosphat: 87,2 %
- an kalium: 97,4 %

### Beispiel 2

In der ersten Verfahrensstufe, in welcher 1,63 t Triplesuperphosphat mit 11,7 m³ Kaliumsulfat enthaltender Mutterlauge zu Kaliumdihydrogenphosphat-Lösung und Gips umgesetzt werden, wird die Reaktionstemperatur auf 313 K gesenkt und die Verweilzeit durch den Anbau weiterer Zellen an die Kammerkaskade auf 45 min erhöht. Dabei wird ein Umsetzungsgips erhalten, der in 1,15 t Trockensubstanz, 9,1 % P₂O₅ und 0,85 % K₂O enthält.

Die Ausbeuten des Verfahrens sind unter diesen Bedingungen:
- an Phosphaten: 86,0 %
- an Kalium: 97,6%

### Beispiel 3

Zu 0,75 t feuchtem Umsetzungsgips aus der ersten Verfahrensstufe werden 0,25 t gemahlenes Triplesuperphosphat zugemischt. Die Mischung wird durch Rollen granuliert. Nach dem Trocknen wird das Granulat als Superphosphat-Produkt ausgeführt.

### Beispiel 4

In dem Prozeß nach dem Beispiel 1 wird das Trommelfilter durch ein Druckfilter ersetzt. Dies ermöglicht eine Entwässerung des Filterkuchens auf 18 % anhaftende Feuchte. Hierdurch stellt sich der Gehalt der Mutterlauge an Magnesiumsulfat auf 41 g auf 1000 g Wasser ein. Der optimale Reaktions-pH-Wert geht in der zweiten Stufe auf 7,3 zurück. Die Qualität des Kaliummagnesiumphosphats bleibt praktisch unverändert.

### Beispiel 5

Unter Beibehaltung der übrigen Reaktionsbedingungen des Beispiels 1 wird die Reaktionstemperatur in der zweiten Stufe um 2 Grad auf 308 K gesenkt. Das gebildete Kaliummagnesiumphosphat wird nach Abtrennung der Mutterlauge pro t Produkt mit 0,4 m³ Kaliumdihydrogenphosphat-Lösung aus der ersten Stufe gewaschen. Das Waschfiltrat wird der ersten Zelle der zweiten Stufe zugeführt.

Der Gehalt des getrockneten Produkts an Kaliummagnesiumphosphat-Hexahydrat steigt durch diese Maßnahme auf 78 % an. Das Produkt enthält 15,8 % K₂O; davon sind 87,3 % als Kaliummagnesiumphosphat gebunden.

## Patentansprüche

1. Verfahren zur Herstellung von Kaliummagnesiumphosphat-Hexahydrat durch Umsetzung von Calciumdihydrogenphosphat mit Kaliumsulfat und einer basischen Magnesiumverbindung in zwei Stufen unter Isolierung des dabei als zweiten Feststoff erzeugten Gipses, gekennzeichnet durch die Kombination folgender Maßnahmen:
- das in der ersten Stufe benötigte Kaliumsulfat wird in die zweite Stufe vor oder zusammen mit der Zugabe des Magnesiumoxids und/oder -hydroxids eingeführt und nach der Kristallisation und Abtrennung des Kaliummagnesiumphosphats mit der Mutterlauge zur ersten Stufe übergeführt, wo die Mutterlauge nach Maßgabe der Umsetzungsgeschwindigkeit zu einer Aufschlämmung des feinteiligen Calciumdihydrogenphosphats in aus dem Ablauf dieser Stufe an ihren Eintritt zurückgeführter ausreagierter Trübe, welche bereits gebildeten Gips als Impfgut enthält, und dem Waschfiltrat des Gipses zugegeben wird,
- die aus der ersten Stufe ablaufende, praktisch ausreagierte Trübe wird aufgeteilt in den Teil, der zum Anschlämmen des Calciumdihydrogenphosphats zurückgeführt wird, und den Teil, der nach Abtrennung des Gipses die in der zweiten Stufe benötigte Kaliumdihydrogenphosphat-Lösung liefert,
- die geklärte Kaliumdihydrogenphosphat-Lösung aus der ersten Stufe wird zusammen mit oder unmittelbar nach der Zugabe des Magnesiumoxids und/oder -hydroxids und des Kaliumsulfats in die aus dem Ablauf der zweiten Stufe an deren Eintritt zurückgeführte ausreagierte Trübe, welche bereits gebildetes Kaliummagnesiumphosphat als Impfgut enthält, eindosiert,
- es wird in die zweite Stufe Ammoniak als Kristallisationsanreger eingeleitet,
- die aus der zweiten Stufe ablaufende ausreagierte Trübe wird aufgeteilt in den Teil, welcher an ihren Eintritt zurückgeht, und den Teil, welcher durch Filtrieren in das als Produkt auszuführende Kaliummagnesiumphosphat-Hexahydrat, welches vor dem Trocknen nicht mit Wasser gewaschen wird, und in die zur ersten Stufe zu führende Mutterlauge zerlegt wird.

2. Verfahren nach Anspruch 1, dadurch gekennzeichnet, daß das Calciumdihydrogenphosphat in der ersten Stufe mit ungefähr der gleichen Menge in Kaliumdihydrogenphosphat-Lösung suspendiertem Gips, wie sich neu bildet, und dem Waschfiltrat aus der Wäsche des auszuführenden Gipses mit Wasser aufgeschlämmt und bei einer Temperatur zwischen 308 und 333 K mit der Kaliumsulfat enthaltenden und ungefähr nach Maßgabe des Reaktionsfortschritts zugesetzten Mutterlauge der Kaliummagnesiumphosphat-Kristallisation umgesetzt und die resultierende, praktisch ausreagierte Trübe geteilt wird, davon der eine Teil an den Eintritt der ersten Stufe zurückgeführt und der andere Teil eingedickt und filtriert wird, worauf der abgetrennte Gips gewaschen und ausgeführt und die geklärte Kaliumdihydrogenphosphat-Lösung der zweiten Stufe zugeführt wird.

3. Verfahren nach Ansprüchen 1 und 2, dadurch gekennzeichnet, daß der aus der ersten Stufe ausgeführte Gips mit einer Wassermenge gewaschen wird, wie sie mit den Produkten beider Stufen als Kristallwasser und anhaftend abzüglich der bei der Reaktion gebildeten und der mit den Reaktanden eingetragenen Wassermenge ausgetragen wird und das Waschfiltrat zum Eintritt in die erste Stufe geführt wird.

4. Verfahren nach Ansprüchen 1 und 2, dadurch gekennzeichnet, daß die nach Abtrennung des Gipses aus der ersten Stufe gewonnene Kaliumdihydrogenphosphat-Lösung an Phosphaten und Sulfaten des Kaliums 90 bis 100 g Kaliumdihydrogenphosphat und 15 bis 25 g Kaliumsulfat pro 1000 g Wasser enthält.

5. Verfahren nach Anspruch 1, dadurch gekennzeichnet, daß das Magnesiumoxid und/oder -hydroxid in der zweiten Stufe zuerst zusammen mit dem Kaliumsulfat in vom Ablauf dieser Stufe an ihren Eintritt zurückgeführter ausreagierter Trübe dispergiert, danach die aus der ersten Stufe herangeführte Kaliumdihydrogenphosphat-Lösung zugegeben, die Reaktionsmischung bei einer Temperatur zwischen 303 und 315 K 20 bis 30 min gerührt, die aus dieser Stufe ablaufende Trübe in die zurückzuführende und die aufzuarbeitende Teilmenge geteilt und in der aufzuarbeitenden Teilmenge das Kaliummagnesiumphosphat als Hexahydrat von der Mutterlauge abgetrennt und als Produkt ausgeführt wird, worauf die Mutterlauge der ersten Stufe zugeführt wird.

6. Verfahren nach Anspruch 1, dadurch gekennzeichnet, daß die Kaliumdihydrogenphosphat-Lösung dem Eintritt der zweiten Stufe gleichzeitig mit der rückgeführten Trübe, dem Magnesiumoxid und/oder -hydroxid und dem Kaliumsulfat aufgegeben wird.

7. Verfahren nach Anspruch 6, dadurch gekennzeichnet, daß das Kaliumsulfat mit dem Magnesiumoxid und/oder -hydroxid vor der Einfuhr in die zweite Stufe vorgemischt wird.

8. Verfahren nach Anspruch 1, dadurch gekennzeichnet, daß die Mutterlauge aus der zweiten Stufe 90 bis 100 g Kaliumsulfat und zwischen 8 und 70 g Magnesiumsulfat pro 1000 g Wasser enthält.

9. Verfahren nach Anspruch 1, dadurch gekennzeichnet, daß am Eintritt in die zweite Stufe Ammoniak in die Reaktionsmischung in der Dosierung von mindestens 1 kg/t Kaliummagnesiumphosphat-Produkt und höchstens 1 Mol pro Mol mit unreinem Calciumdihydrogenphosphat eingetragener freier Phosphorsäure eingeleitet wird.

10. Verfahren nach Anspruch 1, dadurch gekennzeichnet, daß das Kaliummagnesiumphosphat nicht mit Wasser, sondern höchstens mit Kaliumdihydrogenphosphat-Lösung gewaschen und das dabei anfallende Waschfiltrat zum Eintritt in die zweite Stufe geführt wird.

## Claims

1. A process for the production of potassium magnesium phosphate hexahydrate by the reaction of calcium dihydrogen phosphate with potassium sulphate and a basic magnesium compound in two stages with isolation of the gypsum produced in that operation as a second solid, characterised by the combination of the following steps:
- the potassium sulphate required in the first stage is introduced into the second stage prior to or together with the addition of the magnesium oxide and/or hydroxide and is transferred after crystallisation and separation of the potassium magnesium phosphate with the mother liquor to the first stage where the mother liquor in accordance with the reaction rate is added to a suspension of the finely divided calcium dihydrogen phosphate in fully reacted slurry which is recycled from the discharge of this stage to its intake and which contains already formed gypsum as seeding material, and is added to the washing filtrate of the gypsum,
- the practically fully reacted slurry discharged from the first stage is divided into the portion which is recycled for putting the calcium dihydrogen phosphate into suspension, and the portion which after separation of the gypsum supplies the potassium dihydrogen phosphate solution required in the second stage,
- the clarified potassium dihydrogen phosphate solution from the first stage is metered together with or immediately after the addition of the magnesium oxide and/or hydroxide and the potassium sulphate into the fully reacted slurry which is recycled from the discharge of the second stage to the intake thereof and which contains already formed potassium magnesium phosphate as seeding material,
- ammonia is introduced into the second stage as a crystallisation stimulant,
- the fully reacted slurry issuing from the second stage is divided into the portion which returns to its intake and the portion which by filtration is divided into the potassium magnesium phosphate hexahydrate which is to be removed as product and which is not washed with water prior to the drying operation, and the mother liquor which is to be taken to the first stage.

2. A process according to claim 1 characterized in that the calcium dihydrogen phosphate in the first stage is put into suspension with approximately the same amount of gypsum suspended in potassium dihydrogen phosphate solution, as is freshly formed, and the washing filtrate from the operation of washing the gypsum to be removed, with water, and reacted at a temperature of between 308 and 333°K with the potassium sulphate-bearing mother liquor, which is added approximately in accordance with the reaction progress, of the potassium magnesium phosphate crystallisation operation, and the resulting practically fully reacted slurry is divided, of which the one portion is recycled to the intake of the first stage and the other portion is thickened and filtered, whereupon the separated-off gypsum is washed and removed and the clarified potassium dihydrogen phosphate solution is passed to the second stage.

3. A process according to claims 1 and 2 characterised in that the gypsum removed from the second stage is washed with an amount of water as is discharged with the products of both stages as water of crystallisation and clinging-on water less the amount of water which is formed in the reaction and the amount of water introduced with the reactants and the washing filtrate is passed to the intake into the first stage.

4. A process according to claims 1 and 2 characterised in that the potassium dihydrogen phosphate solution obtained after separation of the gypsum from the first stage contains in regard to phosphates and sulphates of potassium from 90 to 100g of potassium dihydrogen phosphate and from 15 to 25g of potassium sulphate per 1000g of water.

5. A process according to claim 1 characterised in that the magnesium oxide and/or hydroxide is first dispersed in the second stage together with the potassium sulphate in fully reacted slurry which is recycled from the discharge of that stage to its intake, thereupon the potassium dihydrogen phosphate solution supplied from the first stage is added, the reaction mixture is agitated at a temperature of between 303 and 315°K for from 20 to 30 minutes, the slurry issuing from that stage is divided into the portion to be recycled and the portion to be processed, and in the portion to be processed the potassium magnesium phosphate is separated as hexahydrate from the mother liquor and removed as product, whereupon the mother liquor is passed to the first stage.

6. A process according to claim 1 characterised in that the potassium dihydrogen phosphate solution is fed to the intake of the second stage simultaneously with the recycled slurry, the magnesium oxide and/or hydroxide and the potassium sulphate.

7. A process according to claim 6 characterised in that the potassium sulphate is pre-mixed with the magnesium oxide and/or hydroxide prior to introduction into the second stage.

8. A process according to claim 1 characterised in that the mother liquor from the second stage contains from 90 to 100 g of potassium sulphate and between 8 and 70 g of magnesium sulphate per 1000 g of water.

9. A process according to claim 1 characterised in that at the intake into the second stage ammonia is introduced into the reaction mixture in an amount of at least 1 kg/t of potassium magnesium phosphate product and at most 1 mole per mole of free phosphoric acid introduced with impure calcium dihydrogen phosphate.

10. A process according to claim 1 characterised in that the potassium magnesium phosphate is not washed with water but at most with potassium dihydrogen phosphate solution and the washing filtrate which is produced in that operation is passed to the intake into the second stage.

## Revendications

1. Procédé de préparation de phosphate de potassium et de magnésium hexahydraté par réaction de dihydrogénophosphate de calcium sur du sulfate de potassium et sur un composé basique de magnésium en deux stades avec isolement du sulfate de calcium produit sous la forme d'une deuxième matière solide, caractérisé par la combinaison des dispositions suivantes :
- le sulfate de potassium, nécessaire au premier stade, est introduit au second stade avant l'addition ou en même temps que l'addition de l'oxyde de magnésium et/ou de l'hydroxyde de magnésium et est envoyé, après la cristallisation et la séparation du phosphate de potassium et de magnésium, avec la liqueur-mère au premier stade où la liqueur-mère est ajoutée en fonction de la vitesse de réaction à une suspension du dihydrogénophosphate de calcium à l'état finement divisé dans une boue qui a cessé de réagir, qui est recyclée de la sortie de ce stade à son entrée et qui contient du sulfate de calcium déjà formé comme germe, et est ajoutée au filtrat de lavage du sulfate de calcium,
- la boue, qui a pratiquement cessé de réagir et qui sort du premier stade, est subdivisée en la partie qui est recyclée pour mettre le dihydrogénophosphate de calcium en suspension et en la partie qui, après séparation du sulfate de calcium, fournit la solution de dihydrogénophosphate de potassium nécessaire au second stade,
- la solution clarifiée de dihydrogénophosphate de potassium du premier stade est introduite de manière dosée, en même temps que l'addition de l'oxyde et/ou de l'hydroxyde de magnésium et du sulfate de potassium ou juste après cette addition, dans la boue qui a cessé de réagir, qui est recyclée de la sortie du second stade à son entrée et qui contient du phosphate de potassium et de magnésium déjà formé comme germe,
- de l'ammoniac servant de promoteur de cristallisation est introduit dans le second stade,
- la boue qui a cessé de réagir et qui sort du second stade est subdivisée en la partie qui retourne à son entrée et en la partie qui, par filtration, est séparée en le phosphate de potassium et de magnésium hexahydraté constituant le produit, lequel est, avant le séchage, lavé mais non par de l'eau et en la lessive-mère à envoyer au premier stade.

2. Procédé suivant la revendication 1, caractérisé en ce que le dihydrogénophosphate de calcium est mis en suspension au premier stade par à peu près la même quantité de sulfate de calcium en suspension dans une solution de dihydrogénophosphate de potassium, tel qu'il s'est nouvellement formé, et par le filtrat du lavage à l'eau du sulfate de calcium à évacuer et est mis à réagir à une température comprise entre 308 et 333 K sur la liqueur-mère de cristallisation du phosphate de potassium et de magnésium contenant du sulfate de potassium et ajoutée approximativement en fonction du progrès de la réaction, et la boue obtenue ayant pratiquement cessé de réagir est subdivisée, une partie de celle-ci étant recyclée à l'entrée du premier stade et l'autre partie étant épaissie et filtrée, le sulfate de calcium séparé étant lavé et évacué et la solution clarifiée de dihydrogénophosphate de potassium étant envoyée au second stade.

3. Procédé suivant la revendication 1 ou 2, caractérisé en ce que le sulfate de calcium évacué du premier stade est lavé par une quantité d'eau, telle qu'elle est extraite avec les produits des deux stades sous forme d'eau de cristallisation et qu'elle adhère, déduction faite de la quantité d'eau formée lors de la réaction et introduite avec les réactifs, et le filtrat de lavage est envoyé à l'entrée du premier stade.

4. Procédé suivant la revendication 1 ou 2, caractérisé en ce que la solution de dihydrogénophosphate de potassium recueillie dans le premier stade, après la séparation du sulfate de calcium, contient en phosphates et sulfates du potassium de 90 à 100 g de dihydrogénophosphate de potassium et de 15 à 25 g de sulfate de calcium par 1000 g d'eau.

5. Procédé suivant la revendication 1, caractérisé en ce que l'oxyde de magnésium et/ou l'hydroxyde de magnésium est dispersé au second stade, d'abord avec le sulfate de potassium, dans la boue ayant cessé de réagir et recyclée de la sortie de ce stade à son entrée, puis la solution de dihydrogénophosphate de potassium provenant du premier stade est ajoutée, le mélange réactionnel est brassé à une température comprise entre 303 et 315 K pendant 20 à 30 minutes, la boue sortant de ce stade est subdivisée en la quantité à recycler et en la quantité à traiter et, dans la quantité à traiter, le phosphate de potassium et de magnésium est séparé, en tant qu'hexahydrate, de la liqueur-mère et est évacué en tant que produit, la liqueur-mère étant envoyée au premier stade.

6. Procédé suivant la revendication 1, caractérisé en ce que la solution de dihydrogénophosphate de potassium est envoyée à l'entrée du second stade, en même temps que la boue recyclée, que l'oxyde de magnésium et/ou que l'hydroxyde de magnésium et que le sulfate de potassium.

7. Procédé suivant la revendication 6, caractérisé en ce que le sulfate de potassium est prémélangé à l'oxyde de magnésium et/ou à l'hydroxyde de magnésium, avant l'entrée dans le second stade.

8. Procédé suivant la revendication 1, caractérisé en ce que la liqueur-mère du second stade contient de 90 à 100 g de sulfate de potassium et entre 8 et 70 g de sulfate de magnésium par 1000 mg d'eau.

9. Procédé suivant la revendication 1, caractérisé en ce qu'à l'entrée du second stade, de l'ammoniac est introduit dans le mélange réactionnel à la dose d'au moins 1 kg/tonne de phosphate de potassium et de magnésium produit et de plus 1 mole par mole avec de l'acide phosphorique libre entraîné par le dihydrogénophosphate de calcium impur.

10. Procédé suivant la revendication, caractérisé en ce que le phosphate de potassium et de magnésium est lavé non à l'eau, mais tout au plus par une solution de dihydrogénophosphate de potassium et le filtrat de lavage qui se forme est envoyé à l'entrée du second stade.
